# DEMANDE DE BREVET EUROPEEN

(11) **EP 2 078 634 A1**
(43) Date de publication de la demande: **15.07.2009**
(21) Numéro de dépôt: 09150167.6
(22) Date de dépôt: 07.01.2009
(51) Int. Cl.: B60M 1/36, B60L 5/42

(54) **Véhicule électrique et système de transport associé**

(30) Priorité: 11.01.2008 FR 0850158
(71) Demandeur: ALSTOM Transport SA, 92300 Levallois-Perret (FR)
(72) Inventeur: Vienney, Pierre-Jean, 7009 Paris (FR); Chaintron, Yann, 13127 Vitrolles (FR)
(74) Mandataire: Blot, Philippe Robert Emile

(57) **Abrégé**

L'invention concerne un véhicule électrique (4) comprenant :
- des moyens de propulsion électrique (13),
- au moins un premier frotteur de captation (11) d'énergie électrique pour alimenter les moyens de propulsion (13), et
- au moins un premier émetteur (18).

Le premier frotteur de captation (11) est séparé du premier émetteur (18) par une première distance (D1) supérieure à 0,2 mètre, le premier émetteur (18) étant positionné avant le premier frotteur de captation (11) en considérant le sens de circulation du véhicule (F1).

L'invention concerne également un système de transport associé.

## Description

La présente invention concerne un véhicule électrique apte à circuler dans un sens de circulation défini, le véhicule étant propre à être alimenté par un dispositif d'alimentation au sol, le dispositif d'alimentation au sol comportant une ligne d'alimentation en courant, des segments de piste conducteurs et des moyens de commande chacun couplé à un segment de piste, chaque moyen de commande étant apte à détecter un signal électromagnétique émis par un détecteur et à connecter la ligne d'alimentation en courant au segment de piste qui lui est couplé lorsqu'il détecte ledit signal électromagnétique, le véhicule comprenant :
- des moyens de propulsion électrique,
- au moins un premier frotteur de captation apte à venir en contact successivement avec chaque segment de piste pour alimenter les moyens de propulsion,
- au moins un premier émetteur propre à émettre un signal électromagnétique en direction de chaque moyen de commande.

Il est connu notamment par le document EP 1 043 187 un système de transport comprenant une série de segments de piste d'alimentation affleurant à la surface de la chaussée et une série de dispositifs de commande chacun apte à relier sélectivement un segment de piste à une ligne d'alimentation en courant ou à une ligne de protection au potentiel du rail de roulement, selon que le dispositif de commande réceptionne ou non un signal électromagnétique généré par un émetteur situé dans un véhicule électrique se déplaçant sur la chaussée.

Le véhicule électrique comprend un moteur électrique, deux frotteurs de captation placés au contact des segments de piste pour alimenter le moteur, et deux bobines émettrices entourant les frotteurs. Les bobines émettrices sont aptes à générer un signal électromagnétique en direction du dispositif de commande.

Le but de la présente invention est de proposer un véhicule électrique alternatif.

Un autre but de l'invention est de fournir un système de transport alternatif.

A cet effet, l'invention a pour objet un véhicule électrique du type précité, **caractérisé en ce que** le premier frotteur de captation est séparé du premier émetteur par une première distance supérieure à 0,2 mètre, et en ce que le premier émetteur est positionné avant le premier frotteur de captation en considérant le sens de circulation du véhicule.

Suivant des modes particuliers de réalisation, le véhicule électrique comporte l'une ou plusieurs des caractéristiques suivantes :
- le véhicule électrique comporte en outre un second frotteur de captation et un deuxième émetteur, le second frotteur de captation est séparé du deuxième émetteur par une seconde distance, et le deuxième émetteur est positionné après le second frotteur de captation en considérant le sens de circulation du véhicule ;
- le véhicule électrique comporte en outre un troisième émetteur, séparé et positionné après le second frotteur de captation en considérant le sens de circulation du véhicule ;
- le véhicule électrique comporte en outre un quatrième émetteur, séparé et positionné avant le premier frotteur de captation en considérant le sens de circulation du véhicule, le quatrième émetteur est séparé du second frotteur de captation par la même distance ;
- la première et la seconde distances sont chacune comprises entre 0.2 mètre et 3 mètres ; et
- le véhicule électrique comporte en outre une unité de pilotage propre à mettre à l'arrêt un émetteur choisi parmi le troisième et le quatrième émetteurs, l'émetteur choisi étant situé à l'arrière du véhicule électrique en considérant le sens de circulation du véhicule.

L'invention a également pour objet un système de transport comprenant :
a) un dispositif d'alimentation au sol comportant une ligne d'alimentation en courant (36) et des segments de piste conducteurs positionnés les uns après les autres et isolés entre eux ;
b) des moyens de commande comprenant chacun un moyen de détection et un moyen de commutation couplés au même segment de piste ; le moyen de détection s'étendant parallèlement au segment de piste qui lui est couplé, au moins une partie du moyen de détection dépassant ce segment de piste, le moyen de détection étant propre à détecter un signal électromagnétique émis par un émetteur ; le moyen de commutation étant apte à connecter la ligne d'alimentation en courant au segment de piste qui lui est couplé lorsque le moyen de détection détecte ledit signal électromagnétique ;
caractérisé en ce qu'il comporte un véhicule électrique selon l'invention ; et en ce que lesdites première et seconde distances sont inférieures à la longueur de la ou de chaque partie du moyen de détection dépassant le segment de piste.

Suivant des modes particuliers de réalisation, le système de transport comporte l'une ou plusieurs des caractéristiques suivantes :
- le dispositif d'alimentation au sol comporte une ligne de protection reliée au rail de roulement, chaque moyen de commutation étant apte à connecter la ligne de protection au segment de piste qui lui est couplé, lorsque le moyen de détection ne détecte plus de signal électromagnétique, et chaque dispositif de commande comporte un dispositif de contrôle propre à interrompre une ligne de sécurité pour faire disjoncter le dispositif d'alimentation au sol lorsque le moyen de détection ne détecte plus de signal électromagnétique après une durée prédéfinie et que le moyen de commutation est toujours connecté au segment de piste après ladite durée prédéfinie ;
- chaque segment de piste présente une longueur comprise entre 4.02 et 18 mètres ;
- chaque moyen de détection s'étend sur une longueur comprise entre 6.02 et 24 mètres ;
- deux moyens de détection adjacents sont contigus et en ce que les segments de piste sont séparés les uns des autres par un intervalle ; et
- chaque moyen de détection comporte une boucle de détection entourant un segment de piste.

L'invention sera mieux comprise à la lecture de la description qui va suivre donnée uniquement à titre d'exemple et faite en se référant aux dessins sur lesquels :
- la figure 1 est une vue schématique de côté représentant un premier mode de réalisation du système de transport conforme à l'invention ainsi qu'un véhicule électrique conforme à l'invention ;
- la figure 2 est une vue schématique de côté représentant un deuxième mode de réalisation du système de transport conforme à l'invention ainsi qu'un véhicule électrique conforme à l'invention.

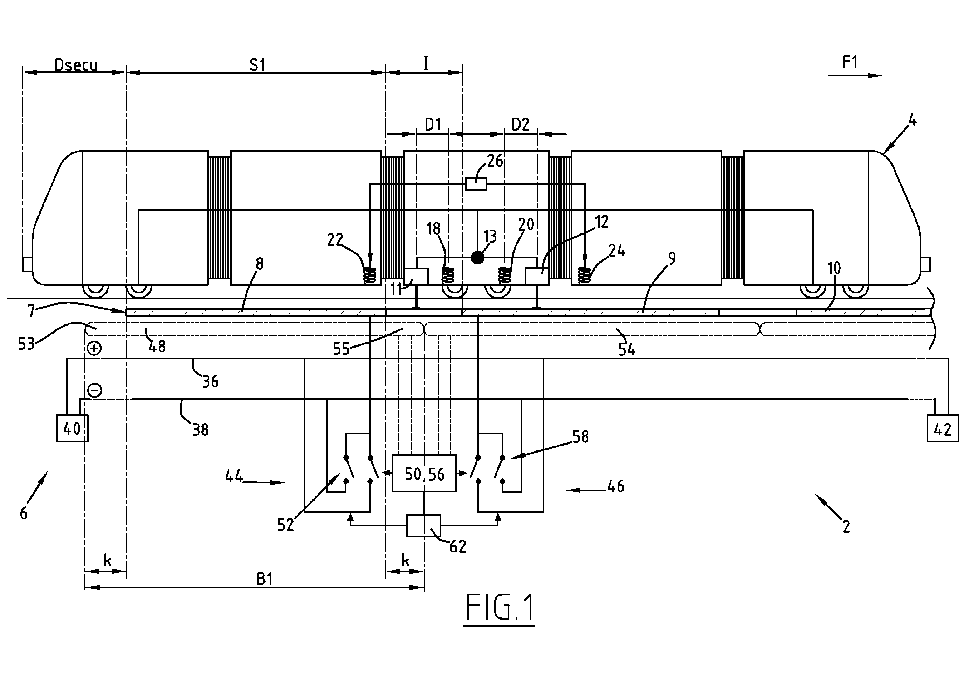

Le système de transport 2 selon un premier mode de réalisation de l'invention est représenté sur la figure 1. Il comprend un véhicule électrique 4 selon l'invention apte à être alimenté par un système d'alimentation au sol 6.

Le système d'alimentation au sol 6 comprend une piste d'alimentation 7 formée d'une série de segments de piste 8, 9, 10 conducteurs.

Les segments de piste 8, 9, 10 sont positionnés les uns après les autres le long de la chaussée et séparés les uns des autres par une zone isolante I qui s'étend sur environ 2 mètres à 6 mètres. Cette zone isolante permet d'éviter le passage de courant d'un segment de piste à l'autre.

Selon le premier mode de réalisation de l'invention, les segments de piste 8, 9, 10 présentent sur une longueur S1 comprise entre 4 mètres et 15 mètres selon la longueur du véhicule considéré.

Selon l'invention, le véhicule électrique 4 présente une longueur environ égale à la longueur de trois segments de piste consécutifs 8, 9, 10. En particulier, le véhicule électrique 4 présente une longueur supérieure à 20 mètres. Le véhicule électrique 4 permet le retour de courant au travers des roues reliées électriquement aux rails métalliques de roulement.

Le véhicule électrique 4 est équipé d'un premier frotteur de captation 11, d'un second frotteur de captation 12 et d'un moteur électrique 13 connecté électriquement aux frotteurs de captation 11 et 12.

Les frotteurs de captation 11 et 12 sont aptes à venir successivement au contact des segments de piste 8, 9, 10 pour alimenter le moteur électrique 13.

Les frotteurs de captation 11 et 12 sont fixés dans une partie centrale du véhicule électrique 4. Ils sont séparés d'une distance supérieure à la longueur de la zone isolante I de sorte qu'un frotteur de captation 11 reste toujours en contact avec un segment de piste 8, 9, 10 lorsque l'autre frotteur de captation 12 est positionné entre deux segments de piste. Ainsi, le véhicule électrique 4 reste toujours alimenté en courant.

Les segments de piste 8, 9, 10 affleurent à la surface de la chaussée de sorte que les frotteurs de captation 11, 12 sont aptes à venir à leurs contacts.

Le véhicule électrique 4 est également muni d'un premier émetteur 18, d'un deuxième émetteur 20, d'un troisième émetteur 22, et enfin d'un quatrième émetteur 24 commandés par une unité de pilotage 26. Dans ce document, les émetteurs et les frotteurs sont qualifiés de premier, second, troisième et quatrième en fonction de leur importance par rapport à l'invention et non en fonction de leur position géographique par rapport au sens F1 de circulation du véhicule 4. Ainsi, le quatrième émetteur 24 est positionné à l'avant du véhicule 4 lorsque celui-ci se dirige selon le sens F1. Il est suivi du second frotteur 12, puis successivement du deuxième émetteur 20, du premier émetteur 18, du premier frotteur 11 et enfin du troisième émetteur 22.

Chaque émetteur 18, 20, 22, 24 est constitué par une bobine émettrice apte à générer un signal électromagnétique en direction du système d'alimentation au sol 6.

Selon l'invention, le premier émetteur 18 est positionné avant et à l'écart du premier frotteur de captation 11 en considérant le sens de circulation F1. En particulier, une première distance D1 sépare le premier émetteur 18 du premier frotteur de captation 11.

Le deuxième émetteur 20 est positionné après et à l'écart du second frotteur de captation 12 en considérant le sens de circulation F1. En particulier, une seconde distance D2 sépare le deuxième émetteur 20 du second frotteur de captation 12.

Les première D1 et seconde D2 distances sont généralement comprises entre 0,2 et 3 mètres. Ces distances D1 et D2 sont mesurées dans un plan horizontal, autrement dit ces distances ne tiennent pas compte de la hauteur à laquelle les émetteurs et les frotteurs de captation sont fixés au châssis.

Selon le mode de réalisation de l'invention illustré sur la figure 1, la première distance D1 présente une longueur sensiblement identique à la seconde distance D2. En variante, les première et seconde distances peuvent avoir des longueurs différentes.

Le troisième émetteur 22 est positionné après et à l'écart du premier frotteur de captation 11 toujours en considérant le sens de circulation F1.

Le quatrième émetteur 24 est positionné avant et à l'écart du second frotteur de captation 12 toujours en considérant le sens de circulation F1.

L'unité de pilotage 26 est apte à commander la mise en marche et l'arrêt du troisième 22 ou du quatrième 24 émetteurs en fonction du sens de circulation du véhicule, comme explicité dans la suite de la description.

Le système d'alimentation au sol 6 comprend, en outre, une ligne 36 d'alimentation en courant, une ligne de protection 38 et des moyens de commande 44, 46 chacun propre à connecter un segment de piste 8, 9, 10 à la ligne d'alimentation en courant 36 ou à la ligne de protection 38 mise au potentiel du rail de roulement.

Les lignes d'alimentation 36 et de protection 38 s'étendent le long des segments de piste 8, 9, 10 et sont reliées en permanence à deux sous-stations d'alimentation 40 et 42. La ligne d'alimentation en courant 36 est maintenue en permanence à une tension de 750 Volts.

Le moyen de commande 44 comprend une boucle de détection 48 couplée au segment de piste 8 et entourant ce segment de piste 8, une unité de commande 50 connectée à la boucle de détection 48, et un moyen de commutation 52 commandé par l'unité de commande 50.

La boucle de détection 48 est apte à détecter un signal électromagnétique émis par un émetteur 18, 20, 22, 24 uniquement lorsque cet émetteur est situé au-dessus et en regard de la boucle de détection 48.

La boucle de détection 48 s'étend parallèlement au segment de piste 8 sur une longueur B1 supérieure à la longueur S1 du segment de piste 8. Une partie 53, 55 de la boucle de détection 48 dépasse à chaque extrémité du segment de piste 8. Chaque partie 53,55 de la boucle de détection dépassant le segment de piste 8 présente une longueur k comprise entre 0 mètres et I/2 (1 étant la longueur de la zone isolante).

La partie 53 de la boucle de détection permet de détecter la présence des émetteur 18, 20, 22, 24 avant que le frotteur de captation 11 ou 12 ne touche le segment de piste 8, 9 ou 10 permettant ainsi de mettre ledit segment de piste sous tension hors charge.

La longueur de B1 est donc comprise entre 6 et 21 mètres. En particulier, selon le premier mode de réalisation de l'invention illustré sur la figure 1, chaque boucle de détection 48, 54 présente une longueur B1 environ égale à 11 mètres.

Selon l'invention, la première distance D1 définie entre le premier frotteur de captation 11 et le premier émetteur 18, ainsi que la seconde distance D2 définie entre le second frotteur de captation 12 et le deuxième émetteur 20 sont chacune inférieures à la longueur k des parties 53, 55 de dépassement de la boucle de détection 48 par rapport au segment de piste 8.

L'unité de commande 50 est apte à réceptionner le signal électromagnétique détecté par la boucle de détection 48 et à détecter l'absence d'un tel signal électromagnétique. L'unité de commande 50 est également propre à commander le moyen de commutation 52 en fonction de la présence ou de l'absence de ce signal électromagnétique.

Le moyen de commutation 52 est apte à connecter le segment de piste 8 à la ligne d'alimentation 36 lorsque l'unité de commande 50 détecte la présence d'un signal électromagnétique et à connecter ce même segment de piste 8 à la ligne de retour de protection 38, lorsque l'unité de commande 50 ne détecte plus de signal électromagnétique.

Ainsi, le moyen de commande 44 est apte à relier le segment de piste 8 à la ligne d'alimentation 36 lorsque l'unité de commande 50 détecte un signal provenant d'un émetteur 18, 20, 22, 24. Ce signal est normalement reçu lorsque l'un des émetteurs émet un signal électromagnétique et est situé sur la boucle de détection 48. Le moyen de commande 44 est également apte à relier le segment de piste 8 à la ligne de protection 38 lorsque l'unité de commande 50 ne détecte pas de signal provenant d'un émetteur. C'est à dire lorsqu'aucun émetteur 18, 20, 22, 24 n'est plus situé au dessus de cette boucle de détection 48.

Le moyen de commande 46 est couplé au segment de piste suivant référencé 9. Il est identique au moyen de commande 44.

Il comprend une boucle de détection 54 couplée au segment de piste 9, une unité de commande 56 connectée à la boucle de détection 54 et un moyen de commutation 58 commandé par l'unité de commande 56.

La boucle de détection 54 est adjacente et contiguë à la boucle de réception 48.

Les unités de commande 50 et 56 ont été représentées schématiquement sur la figure 1 par un unique boîtier car elles sont généralement montées dans un même boîtier.

Le moyen de commande 46 est apte à relier le segment de piste 9 à la ligne d'alimentation 36 lorsqu'un émetteur 18, 20, 22, 24 émettant un signal électromagnétique est disposé au-dessus de la boucle de détection 54 et à relier le segment de piste 9 à la ligne de protection 38 lorsque cet émetteur 18, 20, 22, 24 n'est plus situé au dessus de la boucle de détection 54.

Le système d'alimentation au sol 6 comprend en outre un dispositif de contrôle 62 apte à interrompre la ligne de sécurité reliant les équipements 44 et 46 avec les sous-stations d'alimentation 40 et 42. Cette interruption a pour conséquence de faire disjoncter les deux sous-stations d'alimentation 40 et 42 lorsque après une durée prédéfinie Tp, une des boucles de détection 48, 54 ne détecte plus de signal électromagnétique et que le segment de piste 8, 9 qui lui est couplé n'a pas été remis en contact avec la ligne de protection 38.

A cet effet, le dispositif de contrôle 62 est apte à surveiller l'état de connexion des moyens de commutation 52, 58 et à comparer cet état à l'information selon laquelle le signal électromagnétique est détecté ou non par les boucles de détection 48, 54. Cette information leur est transmise par les unités de commande 50, 56.

En variante, les boucles de détection adjacentes 48 et 54 ne sont pas contiguës. Elles sont par exemple séparées par une distance de quelques mètres.

En fonctionnement, lors du déplacement du véhicule 4 dans la direction F1, l'unité de pilotage 26 commande le premier 18, le deuxième 20 et le quatrième 24 émetteurs afin que ceux-ci émettent un signal électromagnétique. De plus, l'unité de pilotage 26 commande le troisième émetteur 22 alors situé à l'arrière du train, de sorte que celui-ci n'émette pas de signal électromagnétique.

Lorsque le quatrième émetteur 24 du véhicule électrique arrive sur la partie 53 de la boucle de détection 48 dépassant le segment de piste 8, le signal électromagnétique émis par celui-ci est détecté par la boucle de détection 48. L'unité de commande 50 réceptionne ce signal et commande le moyen de commutation 52 afin que celui-ci connecte le segment de piste 8 à la ligne d'alimentation 36 pour l'alimenter. Le second frotteur de captation 12 capte du courant par le segment de piste 8 et alimente le moteur 13.

Comme le segment de piste 8 est alimenté avant que le second frotteur de captation 12 ne l'atteigne, un appel de courant du moteur 13 du véhicule électrique lors de la commutation de l'équipement 52 est évité, de sorte qu'il n'est pas nécessaire d'agencer un moyen de commutation 52 ayant un poids et une taille importante.

Lorsque le quatrième émetteur 24 arrive au-dessus de la boucle de détection 54 suivante, cette dernière détecte le signal électromagnétique émis par le quatrième émetteur 24, l'unité de commande 56 commande le moyen de commutation 58 afin que celui-ci connecte le segment de piste suivant 9 à la ligne d'alimentation en courant 36. A ce moment, le segment de piste précédent 8 est toujours alimenté parce que le premier émetteur 18 est encore situé au-dessus de la boucle de réception 48, ce qui permet d'alimenter le moteur 13 au travers du premier frotteur de captation 11 encore en contact électrique avec le premier segment de piste 8.

Lorsque le premier émetteur 18 n'est plus en vis-à-vis de la boucle de réception 48, l'unité de commande 50 pilote le moyen de commutation 52 afin que celui-ci connecte le segment de piste 8 à la ligne de protection 38.

A ce moment, l'arrière du véhicule 4 est à une distance prédéfinie D_{secu} de l'extrémité la plus proche du segment de piste 8 (partie gauche sur la figure 1).

A ce moment, le système dispose d'un temps T_{secu} avant que le segment 8 de piste apparaisse à l'arrière du véhicule 4. Ce temps T_{secu} se décompose en T _{se-cu1} + T_{secu2}. L'unité de commande 50 et le moyen de commutation 52 disposent d'un temps T_{secu1} pour déconnecter le segment de piste 8 de la ligne d'alimentation en courant 38 et le connecter à la ligne de protection 38. Si ceci n'a pas été réalisé au terme du temps T_{secu1}, alors ce dysfonctionnement est détecté par l'unité de commande 50, et les sous-stations d'alimentation 40 et 42 disposent de T_{secu2} pour mettre hors tension la ligne d'alimentation 36.

Ce temps total T_{secu} doit être égal ou inférieur au temps nécessaire au véhicule électrique pour parcourir la distance D_{secu} définie entre l'arrière du véhicule et l'extrêmité la plus proche du segment de piste 8 (extrémité gauche du segment de piste 8 sur la figure 1) afin d'éviter une éventuelle électrocution d'un piéton situé sur le segment de piste 8.

Comme le premier émetteur 18 est positionné à l'avant du premier frotteur de captation 11, la distance D_{secu} est plus grande dans le véhicule électrique 4 selon l'invention que dans un véhicule de l'état de la technique dans lequel, d'une part les émetteurs 18 et 20 sont disposés autour du premier 11 et du second 12 frotteurs de captation, et d'autre part les émetteurs 22 et 24 n'existent pas.

En particulier, comme le premier émetteur 18 est séparé du premier frotteur de captation 11 d'une première distance D1, la distance D_{secu} du système de transport 2 selon l'invention est égale à la distance D_{secu} d'un véhicule électrique de l'état de la technique additionnée de la première distance D1.

Lorsque le véhicule électrique circule dans la direction opposée à la direction F1, l'unité de pilotage 26 met à l'arrêt l'émetteur 24 situé cette fois, à l'arrière du véhicule.

En conséquence, le véhicule électrique 4 selon l'invention comporte deux émetteurs supplémentaires 22, 24 que les véhicules électriques de l'état de la technique grâce auxquels il peut rouler plus vite tout en restant également sécuritaire, ou bien grâce auquel il est possible d'installer des segments 8, 9, 10 plus longs tout en restant également sécuritaire.

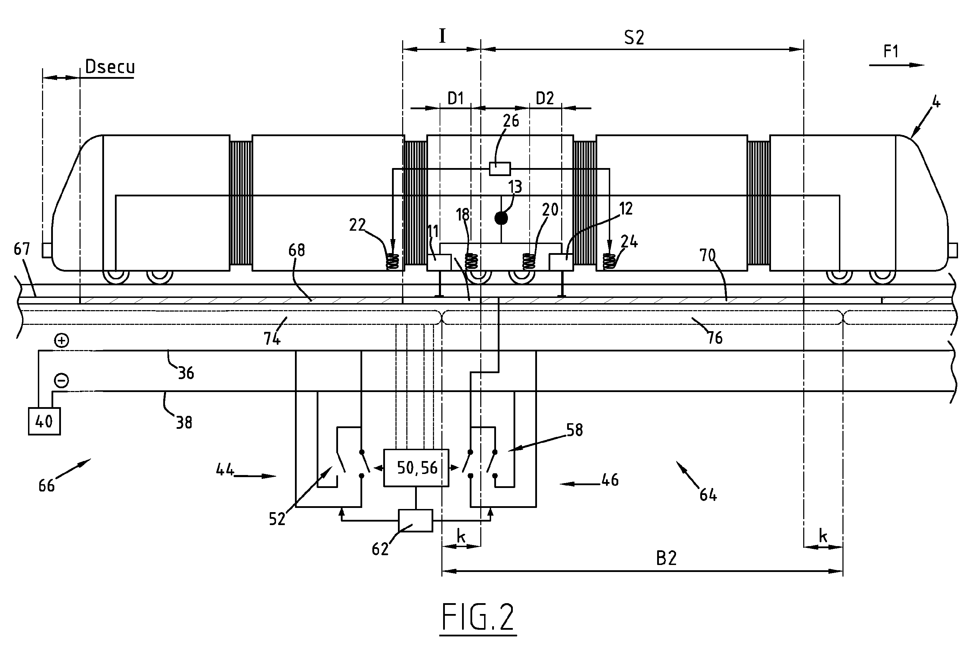

Un système de transport 64 selon un second mode de réalisation de l'invention est représenté sur la figure 2. Sur la figure 2, les éléments identiques aux éléments de la figure 1 ont été référencés par les mêmes références et ne seront pas décrits une seconde fois.

Le système de transport 64 comprend un véhicule électrique 4 identique au véhicule électrique 4 illustré sur la figure 1, et un système d'alimentation au sol 66 propre à alimenter ce véhicule.

Le système d'alimentation au sol 66 comprend une piste d'alimentation 67 formée d'une série de segments de piste 68, 70 conducteurs et une série de boucles de détection 74, 76 chacune entourant un segment de piste 68, 70.

Les segments de piste 68, 70 du second mode de réalisation de l'invention présentent une longueur S2 supérieure à la longueur S1 des segments de piste 8, 9, 10 du premier mode de réalisation de l'invention.

En particulier, les segments de piste 68, 70 présentent une longueur S2 égale à la longueur S1 additionnée de la plus petite distance entre la première distance D1 et la seconde distance D2. Cette plus petite distance est référencée D ci-après. Dans l'exemple décrit ci-dessus, la distance D1 = D2 = D, et est comprise entre 0,2 et 3 mètres.

En conséquence, les segments de piste 68, 70 ont une longueur de 4.2 mètres (=4+0.2) à 18 mètres (=15+3).

De même, les boucles de détection 74 et 76 du second mode de réalisation de l'invention présentent une longueur B2 supérieure à la longueur B1 des boucles de détection 48, 54 du premier mode de réalisation de l'invention.

En particulier, les boucles de détection 74 et 76 présentent une longueur B2 égale à la longueur B1 de la boucle de détection 48, 54 du premier mode de réalisation de l'invention additionnée de la distance D.

Par exemple, les boucles de détection 74 et 76 ont une longueur de 6.02 mètres (=4.02+2) à 24 mètres (=18+6).

Le système de transport 64 fonctionne de la même manière que le système de transport 6.

La distance de sécurité D_{secu} du système de transport 64 est égale à la distance D_{secu} de l'état de la technique mais le système de transport 64 comprend un nombre inférieur de boîtier 50, 56 pour une longueur définie de piste d'alimentation 67.

En effet, comme visible sur les figures 1 et 2, un boîtier 50, 56 est disposé le long de la chaussée pour commander l'alimentation d'une piste d'alimentation 7 ayant une longueur de B1 + B1 dans le système d'alimentation 6 selon le premier mode de réalisation de l'invention, alors que dans le système d'alimentation 66, un boîtier 50, 56 est utilisé pour commander l'alimentation d'une piste d'alimentation 67 qui s'étend sur une longueur de B2 + B2 = B1 + B1 + D + D.

Ainsi, le système de transport 64 selon ce second mode de réalisation de l'invention est plus économique puisqu'il permet d'agencer moins de boîtier 50, 56 sur une longueur prédéfinie de piste d'alimentation.

Les premier et second modes de réalisation de l'invention peuvent être mis en oeuvre indépendamment l'un de l'autre ou en combinaison.

Avantageusement, comme les émetteurs 18, 20, 22, 24 sont éloignés des frotteurs de captation 11, 12, les frotteurs sous tension ne modifient pas le signal électromagnétique émis par les émetteurs.

## Revendications

1. Véhicule électrique (4) apte à circuler dans un sens de circulation défini ; le véhicule (4) étant propre à être alimenté par un dispositif d'alimentation au sol (6 ; 66), le dispositif d'alimentation au sol (6 ; 66) comportant une ligne d'alimentation en courant (36), des segments de piste conducteurs (8, 9, 10 ; 68, 70) et des moyens de commande (44, 46) chacun couplé à un segment de piste (8, 9, 10 ; 68, 70), chaque moyen de commande (44, 46) étant apte à détecter un signal électromagnétique émis par un détecteur (18, 20, 22, 24) et à connecter la ligne d'alimentation en courant (36) au segment de piste (8, 9, 10 ; 68, 70) qui lui est couplé lorsqu'il détecte ledit signal électromagnétique, le véhicule (4) comprenant :
- des moyens de propulsion électrique (13),
- au moins un premier frotteur de captation (11) apte à venir en contact successivement avec chaque segment de piste (8, 9, 10 ; 68, 70) pour alimenter les moyens de propulsion (13),
- au moins un premier émetteur (18) propre à émettre un signal électromagnétique en direction de chaque moyen de commande (44, 46),
**caractérisé en ce que** le premier frotteur de captation (11) est séparé du premier émetteur (18) par une première distance (D1) supérieure à 0,2 mètre, et **en ce que** le premier émetteur (18) est positionné avant le premier frotteur de captation (11) en considérant le sens de circulation du véhicule (F1).

2. Véhicule électrique (4) selon la revendication 1, **caractérisé en ce qu'**il comporte en outre un second frotteur de captation (12) et un deuxième émetteur (20), le second frotteur de captation (12) est séparé du deuxième émetteur (20) par une seconde distance (D2), et **en ce que** le deuxième émetteur (20) est positionné après le second frotteur de captation (12) en considérant le sens de circulation du véhicule (F1).

3. Véhicule électrique (4) selon la revendication 1 ou 2, **caractérisé en ce qu'**il comporte en outre un troisième émetteur (22), séparé et positionné après le second frotteur de captation (12) en considérant le sens de circulation du véhicule (F1).

4. Véhicule électrique (4) selon la revendication 2 ou 3, **caractérisé en ce qu'**il comporte en outre un quatrième émetteur (24), séparé et positionné avant le premier frotteur de captation (11) en considérant le sens de circulation du véhicule (F1), le quatrième émetteur (24) est séparé du second frotteur de captation (12) par la même distance (D1).

5. Véhicule électrique (4) selon l'une quelconque des revendications 2 à 4, **caractérisé en ce que** la première (D1) et la seconde (D2) distances sont chacune comprises entre 0.2 mètre et 3 mètres.

6. Véhicule électrique (4) selon l'une quelconque des revendications 3 à 5, **caractérisé en ce qu'**il comporte en outre une unité de pilotage (26) propre à mettre à l'arrêt un émetteur choisi parmi le troisième (22) et le quatrième (24) émetteurs, l'émetteur choisi étant situé à l'arrière du véhicule électrique (4) en considérant le sens de circulation du véhicule (F1).

7. Système de transport (2 ; 64) comprenant :
a) un dispositif d'alimentation au sol (6 ; 66) comportant une ligne d'alimentation en courant (36) et des segments de piste conducteurs (8, 9, 10 ; 68, 70) positionnés les uns après les autres et isolés entre eux ;
b) des moyens de commande (44, 46) comprenant chacun un moyen de détection (48, 54 ; 74,76) et un moyen de commutation (52, 58) couplés au même segment de piste (8, 9, 10 ; 68, 70) ; le moyen de détection (48, 54 ; 74,76) s'étendant parallèlement au segment de piste (8, 9, 10 ; 68, 70) qui lui est couplé, au moins une partie (53, 55) du moyen de détection (48, 54 ; 74,76) dépassant ce segment de piste (8, 9, 10 ; 68, 70), le moyen de détection (48, 54 ; 74,76) étant propre à détecter un signal électromagnétique émis par un émetteur (18, 20, 22, 24) ; le moyen de commutation (52, 58) étant apte à connecter la ligne d'alimentation en courant (36) au segment de piste (8, 9, 10 ; 68, 70) qui lui est couplé lorsque le moyen de détection (48, 54 ; 74,76) détecte ledit signal électromagnétique ;
**caractérisé en ce qu'**il comporte un véhicule électrique (4) selon l'une quelconque des revendications 1 à 6 ; et **en ce que** lesdites première (D1) et seconde (D2) distances sont inférieures à la longueur de la ou de chaque partie (53, 55) du moyen de détection (48, 54 ; 74, 76) dépassant le segment de piste (8, 9, 10 ; 68, 70).

8. Système de transport (2 ; 64) selon la revendication 7, **caractérisé en ce que** le dispositif d'alimentation au sol (6 ; 66) comporte une ligne de protection (38) reliée au rail de roulement, chaque moyen de commutation (52, 58) étant apte à connecter la ligne de protection (38) au segment de piste (8, 9, 10 ; 68, 70) qui lui est couplé, lorsque le moyen de détection (48, 54 ; 74, 76) ne détecte plus de signal électromagnétique, et **en ce que** chaque dispositif de commande (6 ; 66) comporte un dispositif de contrôle (62) propre à interrompre une ligne de sécurité pour faire disjoncter le dispositif d'alimentation au sol (6 ; 66) lorsque le moyen de détection (48, 54 ; 74, 76) ne détecte plus de signal électromagnétique après une durée prédéfinie (Tp) et que le moyen de commutation (52, 58) est toujours connecté au segment de piste (8, 9, 10 ; 68, 70) après ladite durée prédéfinie (Tp).

9. Système de transport (2 ; 64) selon l'une quelconque des revendications 7 et 8, **caractérisé en ce que** chaque segment de piste (8, 9, 10 ; 68, 70) présente une longueur comprise entre 4.02 et 18 mètres.

10. Système de transport (2 ; 64) selon l'une quelconque des revendications 7 à 9, **caractérisé en ce que** chaque moyen de détection (48, 54 ; 74, 76) s'étend sur une longueur comprise entre 6.02 et 24 mètres.

11. Système de transport (2 ; 64) selon l'une quelconque des revendications 7 à 10, **caractérisé en ce que** deux moyens de détection (48, 54 ; 74, 76) adjacents sont contigus et **en ce que** les segments de piste (8, 9, 10 ; 68, 70) sont séparés les uns des autres par un intervalle (I).

12. Système de transport (2 ; 64) selon l'une quelconque des revendications 7 à 11, **caractérisé en ce que** chaque moyen de détection (48, 54 ; 74, 76) comporte une boucle de détection entourant un segment de piste (8, 9, 10 ; 68, 70).
